# EUROPÄISCHE PATENTSCHRIFT

(11) **EP 1 286 048 B1**
(45) Veröffentlichungstag und Bekanntmachung des Hinweises auf die Patenterteilung: **15.06.2011**
(21) Anmeldenummer: 02018224.2
(22) Anmeldetag: 20.08.2002
(51) Int. Cl.: F03D 1/06, F03D 11/00, F03D 7/02

(54) **Einrichtung zum Verstellen des Rotorblattes eines Rotors einer Windkraftanlage**
Device for adjustment of rotor blades of the rotor in a wind power system
Dispositif de réglage pour les aubes d'un rotor d'une éolienne

(30) Priorität: 20.08.2001 DE 10140793
(43) Veröffentlichungstag der Anmeldung: 26.02.2003
(73) Patentinhaber: GENERAL ELECTRIC COMPANY, Schenectady, NY 12345 (US)
(72) Erfinder: Weitkamp, Roland, 49191 Belm (DE); Lütze, Henning, 48455 Bad Bentheim (DE); Riesberg, André, 49134 Wallenhorst (DE); Anemüller, Jochen, 34008 Elze (DE)
(74) Vertreter: Zimmermann & Partner

(56) Entgegenhaltungen:
- DE-C- 19 634 059
- US-A- 4 490 093

## Beschreibung

Die Erfindung bezieht sich auf eine Einrichtung zum Verstellen eines sich in seiner Längsachse von einer Rotornabe eines Rotors einer Windkraftanlage aus erstreckenden Rotorblattes um einen in bezug auf die Längsachse azimutalen Verstellwinkel, sowie auf Verfahren zum Betreiben dieser Einrichtung.

Die Steuerung oder Regelung der azimutalen Winkeleinstellung der Rotorblätter von Rotoren in Windkraftanlagen ermöglicht eine Verminderung des Anströmwinkels bei hohen Windgeschwindigkeiten. Dadurch kann die Rotordrehzahl und die Leistung des von dem Rotor angetriebenen Generators begrenzt und eine Überlastung der mechanischen und elektrischen Komponenten der Windkraftanlage verhindert werden. Entsprechende Systeme, die elektrisch oder hydraulisch angetrieben sind, sind seit vielen Jahren bekannt. Hierunter befinden sich Systeme mit Verstellantrieben, die in der Rotornabe oder in einem drehfest mit dem Rotorblatt verbundenen Rohrstück angeordnet sind. Daneben sind auch Systeme bekannt, die unmittelbar in das Rotorblatt integriert sind (DE-A-196 34 059).

Es gibt auch teilredundante Verstellsysteme für Rotorblätter, bei denen beispielsweise eine kollektive hydraulische Zentralverstellung mit drei in der Rotornabe Installierten hydraulischen Einzelversteilsystemen kombiniert ist, die aber einzeln nur einen Teil des zum lastarmen Betrieb insgesamt erforderlichen Versteilbereiches abdecken. Auch gibt es vereinzelte Ausführungen von vollredundanten Antriebssystemen für die Rotorblattverstellung. Diese weisen jedoch keine Redundanz für den Fall der Blockierung der Drehverbindung zwischen dem Rotorblatt und der Rotornabe auf.

Wenn beispielsweise bei Netzausfall oder bei einer Notabschaltung das Verstellsystem für eines der Rotorblätter versagt, verbleibt dieses Rotorblatt in seiner Betriebsstellung, während die anderen Rotorblätter in ihre Bremsposition verstellt werden. Insbesondere bei großen Rotoren von 100 m und mehr führt die sich daraus ergebende aerodynamische Unwucht zu so hohen Belastungen, daß sie den für die Auslegung vieler Hauptkomponenten der Turbine zu berücksichtigenden Extremlastfall darstellen.

Bei der Rotorblattlagerring gemäß DE 196 34 059 ist ein Lagerring and die Rotornabe und ein anderer Lagerring an den Blattanschluß angesetzt. Ein Verstellantrieb ist ebenfalls an den Blattanschluß angesetzt und wirkt auf die Rotornabe.

Der Erfindung liegt die Aufgabe zugrunde, eine Einrichtung der eingangs genannten Art zu schaffen, die durch eine vollständige Redundanz eine erhöhte Zuverlässigkeit gewährleistet und es dennoch ermöglicht, den dafür erforderlichen Mehraufwand durch Einsparungen an der Auslegung der gesamten Windkraftanlage wettzumachen.

Erfindungsgemäß wird diese Aufgabe dadurch gelöst, daß die Einrichtung zwei voneinander unabhängige Verstellsysteme aufweist, deren jedes auch bei einem Ausfall des jeweils anderen Verstellsystems die Verstellung des Rotorblattes bewirkt.

Bei der erfindungsgemäßen Einrichtung setzt sich die azimutale Verstellbewegung des Rotorblattes aus den Verstellbewegungen der beiden Verstellsysteme zusammen. Da letztere voneinander unabhängig sind, wird das Rotorblatt beim Ausfall eines der beiden Verstellsysteme immer noch durch das jeweils andere Verstellsystem verstellt. Der für diese vollständige Redundanz erforderliche Aufwand wird insbesondere bei Windkraftanlagen im Multimegawattbereich durch eine deutlich Absenkung der dimensionierenden Extremlasten mehr als ausgeglichen.

Es versteht sich, daß für jedes Rotorblatt des Rotors eine erfindungsgemäße Einrichtung vorzusehen ist. Beispielsweise haben Rotoren mit zwei oder drei Rotorblättern dementsprechend zwei oder drei erfindungsgemäße Einrichtungen. Die Antriebsenergie für die Verstellsysteme kann in bekannter Weise hydraulischer, elektrischer oder mechanischer Natur sein, letzteres beispielsweise unter Nutzung der Rotationsenergie des Rotors. Antriebsenergiespeicher können voneinander unabhängig für jede Einrichtung vorgesehen sein. Alternativ kann aber auch ein einziger Antriebsenergiespeicher für alle Rotorblätter eines Rotors gemeinsam genutzt werden. Daneben kann die Antriebsenergie auch aus ohnehin auf jedes Rotorblatt wirkenden inneren oder äußeren Kräften, wie Luft-, Massen-, Trägheits- oder Zentrifugalkräften, gewonnen werden.

Die erfindungsgemäße Einrichtung umfaßt weiterhin, daß die beiden Verstellsysteme je eine zwischen der Rotornabe und dem Rotorblatt angeordnete, von einem Antrieb verstellbare Drehverbindung aufweisen. Dies kann beispielsweise dadurch verwirklicht werden, daß auf das herkömmlicherweise an der Rotornabe vorgesehene Verstellsystem das zusätzliche Verstellsystem aufgesetzt wird. Alternativ könnten jedoch beide Verstellsysteme auch außerhalb der Rotornabe und in einem Abstand zu dieser längs der Längsachse des Rotorblattes angeordnet sein. Mit dem in dieser Beschreibung und den Ansprüchen benutzten Begriff Antrieb werden alle gängigen Antriebssysteme, wie etwa elektrische Antriebe, Hydraulikzylinder, Gewindespindeln und dgl., erfaßt.

Weiterhin sind die beiden Drehverbindungen im wesentlichen zueinander konzentrisch angeordnet. In diesem Fall nehmen sie in bezug auf die Rotorachse dieselbe radiale Lage ein. Dann können die dem Anschluß an die Drehverbindungen dienenden Flansche des Rotorblattes und der Rotornabe mit deutlich verschiedenen Durchmessern ausgeführt werden. Dies kann unter gewissen Randbedingungen, beispielsweise transportlogistischen Beschränkungen, vorteilhaft zur gesamtwirtschaftlichen Optimierung der Windkraftanlage beitragen.

Im Hinblick auf eine einfache modulare Bauweise ist es vorteilhaft, die beiden Drehverbindungen längs der Längsachse des Rotorblattes in einem axialen Abstand zueinander anzuordnen, insbesondere eine der beiden Drehverbindungen sowie deren Antrieb an der Rotornabe und die andere Drehverbindung sowie deren Antrieb außerhalb der Rotornabe anzuordnen. In diesem Fall befindet sich das eine Verstellsystem an der Rotornabe und das andere als eigene Einheit in einem axialen Abstand vor jedem Anschlußflansch der Rotornabe.

Besonders einfach wird der strukturelle Aufbau dadurch, daß die außerhalb der Rotornabe angeordnete Drehverbindung sowie deren Antrieb an einem sich zwischen den beiden Drehverbindungen axial erstreckenden rohrförmigen Bauteil angeordnet ist. Dabei kann das rohrförmige Bauteil auch zur Aufnahme eines Antriebsenergiespeichers für das Verstellsystem dienen. Das rohrförmige Bauteil kann gleichzeitig dazu benutzt werden, für unterschiedliche Standorte mit ein und demselben Rotorblatt Anpassungen des Rotordurchmessers vorzunehmen. Die hierzu erforderlichen rohrförmigen Bauteile unterschiedlicher Länge (Extender) können vorzugsweise aus Faserverbundwerkstoffen, beispielsweise glasfaser- oder kohlenstoffaserverstärkter Kunststoff, hergestellt sein. Bevorzugt ist hierzu ein Wickelverfahren geeignet.

Weiter besteht eine zweckmäßige Ausführungsform darin, daß eine der beiden Drehverbindungen sowie deren Antrieb an der Rotornabe und die andere Drehverbindung sowie deren Antrieb unmittelbar am Rotorblatt angeordnet ist. Dies ist insbesondere für Starkwindstandorte zweckmäßig, bei denen ein kleiner Rotordurchmesser vorteilhaft ist. Das von dem rohrförmigen Bauteil gebildete Zwischenstück (Extender) wird hierbei eingespart. Der Antrieb der am Rotorblatt angeordneten Drehverbindung und auch damit zusammenhängende weitere Komponenten können dabei sowohl innerhalb als auch außerhalb des Rotorblattes angeordnet werden.

Im Rahmen der Erfindung ist insbesondere vorgesehen, daß die beiden Verstellsysteme gleichzeitig betätigbar sind. Hierdurch können die bei einer Sicherheitsabschaltung erforderlichen Verstellgeschwindigkeiten bei besonders wirtschaftlicher Auslegung der Einrichtung erzielt werden, weil sich die Verstellgeschwindigkeiten der einzelnen Verstellsysteme summieren. Als Beispiel sei eine Windkraftanlage betrachtet, deren Rotor drei Rotorblätter aufweist und bei der die erforderliche Verstellgeschwindigkeit 7°/s betragen soll. Diese Windkraftanlage weist also drei Verstelleinrichtungen mit je zwei voneinander unabhängigen Verstellsystemen, insgesamt also sechs Verstellsysteme, auf. Von diesen können beispielsweise drei für eine maximale Verstellgeschwindigkeit von 3°/s und die anderen drei für 4°/s ausgelegt werden. Bei robuster Dimensionierung der Windkraftanlage ist es ausreichend, die drei Verstellsysteme mit der geringeren Verstellrate mit nur einem gemeinsamen Antrieb und/oder Energiespeicher auszustatten (kollektives Verstellsystem), während die Verstellsysteme mit der größeren Rate vollständig unabhängig voneinander ausgebildet werden. Insgesamt liegen dann vier vollständig unabhängige Verstellsysteme vor. Beim Ausfall eines einzelnen Verstellsystems werden sodann zwei Rotorblätter mit 7°/s und ein Rotorblatt mit 3°/s verstellt. Fällt jedoch das kollektive System aus, werden alle drei Rotorblätter mit 4°/s verstellt. Beide Ausfallsarten führen somit zu erheblich geringeren Lasten, als es im Stand der Technik der Fall ist, wo die Blockierung einer Drehverbindung zur Verstellung von zwei Rotorblättern mit 7°/s führt, während sich das dritte Rotorblatt gar nicht mehr bewegt. Bei hochoptimierten Windkraftanlagen wird es jedoch sinnvoll sein, alle Verstellsysteme (im Falle eines Rotors mit drei Rotorblättern sechs Verstellsysteme) vollständig redundant auszustatten, so daß auf zwei Rotorblattachsen bei jedem einzelnen Ausfall die volle Verstellgeschwindigkeit zur Verfügung steht.

Eine andere vorteilhafte Ausgestaltung besteht darin, daß die aus dem Betrieb der beiden Verstellsysteme resultierende azimutale Verstellrate veränderlich steuerbar ist. Um bei einer Sicherheitsabschaltung bei großen Windturbinen die Belastung auf den Turm durch negativen Turmschub (Umkehrschub) zu reduzieren, hat es sich als sehr vorteilhaft erwiesen, bei Auslösung der Sicherheitskette die Verstellung der Rotorblätter in ihre sichere Fahnenstellung nicht mit konstanter Verstellrate, sondern mit während des Verstellvorgangs veränderlicher Verstellrate durchzuführen. Je nach Anlagenkonzeption, beispielsweise abhängig von der Anzahl der Rotorblätter, der Rotordrehzahl, der Nachgiebigkeit der Rotorblätter und des Turms, kann es am günstigsten sein, die Verstellrate in Abhängigkeit von der Zeit, dem Rotorblattwinkel oder dem Verstellweg zu steuern.

Dabei tritt allerdings das technische Problem auf, daß die Sicherheitsverstellfunktion bei Windkraftanlagen nur mit einfachsten elektromechanischen Bauteilen realisiert werden sollte, um sicherzustellen, daß das System auch nach einem Blitzschlag noch voll funktionstüchtig ist. Dies läßt sich im Rahmen der Erfindung besonders einfach und ausfallsicher dadurch realisieren, daß die Verstellrate des einen Verstellsystems in Abhängigkeit von dem Verstellweg des anderen Verstellsystems gesteuert wird.

Beispielsweise läßt sich hierdurch sehr einfach ein linear abfallender Verlauf der insgesamt wirksamen Verstellrate von einem maximalen Anfangswert bei einem Rotorblattwinkel von 0° bis zu einem niedrigeren Wert, der die Hälfte des maximalen Anfangswertes beträgt, bei einem Rotorblattwinkel von 90° einstellen, also ein trapezförmiger Verlauf der Verstellrate. Fällt dabei eines der beiden Verstellsysteme aus, so bewirkt das andere Verstellsystem eine Verstellung mit der Hälfte der maximalen Verstellrate bis zur sicheren Fahnenstellung. Bei einem Ausfall wird somit lediglich der dreieckförmige Bereich des trapezförmigen Stellratenverlaufs abgeschnitten. Hierdurch wird insbesondere bei einer Windkraftanlage, deren Rotor drei Rotorblätter mit je zwei unabhängigen Verstellsystemen aufweist, die Auswirkung des Ausfalls eines Verstellsystems so weit reduziert, daß die dadurch entstehenden zusätzlichen Belastungen, insbesondere durch aerodynamische Unwucht und verzögertes Bremsmanöver, problemlos von der Tragstruktur aufgefangen werden.

Mit Vorteil wird die erfindungsgemäße Einrichtung derart ausgebildet, daß mindestens eines der Verstellsysteme ein elektrisches System ist. Dieses kann beispielsweise, wie im Stand der Technik bekannt, eine elektrische Getriebemotorkombination aufweisen, in der das Abtriebsritzel des Getriebemotors mit einer Verzahnung auf einem Ring der Drehverbindung kämmt. Insbesondere können sehr ähnliche Ausbildungen für die beiden Verstellsysteme jedes Rotorblattes eingesetzt werden, was durch den Serieneffekt zu einer sehr wirtschaftlichen Lösung führt.

Die elektrisch ausgebildeten Verstellsysteme können vorteilhaft derart weitergebildet sein, daß eine Überwachungseinrichtung vorgesehen ist, durch die ansprechend auf einen Ausfall eines der beiden Verstellsysteme die Verstellrate des jeweils anderen Verstellsystems zumindest zeitweise erhöht wird. Als Überwachungseinrichtung kommen insbesondere elektromechanische Schalter und logische Relaisschaltungen in Betracht. Wird der Ausfall eines Verstellsystems erkannt, kann das zugehörige andere Verstellsystem kurzzeitig in Überlast, also mit höherer als der Nennverstellrate, betrieben werden, wodurch die Auswirkung des Ausfalls weiter reduziert wird. Da es sich bei den Verstellvorgängen um Abläufe von höchstens 30 s Dauer handelt, ist eine derartige Überlastbeanspruchung des betreffenden Verstellsystems ohne thermische Schädigung möglich.

Weiter können die elektrischen Verstellsysteme derart ausgebildet sein, daß die Verstellrate durch stufenweises Zu- bzw. Abschalten von den Antrieb speisenden Akkuzellen verändert wird. Dieses Zu- bzw. Abschalten kann beispielsweise durch elektromechanische Schalter erfolgen, die über Nocken an dem jeweils anderen Verstellsystem betätigt werden. Hierbei müssen die Schalter allerdings relativ groß ausgelegt werden, da sie unter Last Gleichstrom schalten müssen.

Dies läßt sich durch eine andere Ausbildung vermeiden, bei der die Verstellrate durch stufenweises Umschalten einer Statorwicklung des Antriebs verändert wird. Beispielsweise kann durch eine zweipolig ausgebildete Statorwicklung der trapezförmige Verstellratenverlauf durch drei Stufen angenähert werden.

Gemäß einem weiteren Gedanken der Erfindung weist der Antrieb des einen Verstellsystems einen Reihenschlußmotor und der Antrieb des anderen Verstellsystems einen Nebenschlußmotor auf. Dies trägt dem Umstand Rechnung, daß bei Blattverstellsystemen einerseits auch im Akkubetrieb ein möglichst hohes Anfahrmoment erwünscht ist, damit es bei windbedingten Belastungsspitzen nicht zu einem Blockieren des Antriebs kommt. Dem entspricht das Verhalten der Reihenschlußmaschine. Andererseits soll bei niedrigen Belastungen die Verstellrate möglichst konstant bleiben. Dem entspricht das Verhalten der Nebenschlußmaschine. Üblicherweise ist es so, daß das Lastniveau der Windkraftanlage nach Einsetzen des Verstellvorgangs relativ schnell abnimmt. Folglich ist es von besonderem Vorteil, die beiden auf dasselbe Rotorblatt wirkenden Verstellsysteme mit diesen unterschiedlichen Typen von Antriebsmaschinen auszustatten. Dabei ist es besonders vorteilhaft, die Reihenschlußmaschine während des Verstellvorgangs in der vorstehend dargestellten Weise vorzugsweise gestuft abzuregeln. Im Rahmen der Erfindung ist auch daran gedacht, zusätzlich oder alternativ eine kontinuierliche rampenförmige Abregelung vorzusehen.

Aus wirtschaftlichen Gründen kann es von besonderem Vorteil sein, daß der Antrieb des einen Verstellsystems einen Drehstrommotor und der Antrieb des anderen Verstellsystems einen Gleichstrommotor aufweist. Der Drehstrommotor erfordert dann den Einsatz eines Frequenzumrichters, um die für den Regelbetrieb veränderliche Verstellgeschwindigkeit zu realisieren. Bei der Sicherheitsabschaltung wird dann ein Akku auf den Gleichstromzwischenkreis geschaltet. Dies ist im Stand der Technik bekannt. Je nach erforderlicher Redundanz kann ein einziger Wechselrichter für alle Rotorblätter oder für jedes Rotorblatt je ein Wechselrichter vorgesehen werden. Eine derartig kombinierte Einrichtung, bei der auf jedes Rotorblatt ein Drehstrom- und ein Gleichstromsystem wirken können, vereint somit den wirtschaftlichen Vorteil des Drehstromsystems mit der hohen Zuverlässigkeit des Gleichstromsystems.

Nach einem anderen Gedanken der Erfindung ist vorgesehen, daß die Drehachsen der beiden Drehverbindungen gegeneinander geneigt sind. Hierdurch kann dem Umstand Rechnung getragen werden, daß bei großen Windkraftanlagen die lastbedingte Durchbiegung der Rotorblätter kritisch wird und der Gefahr einer hierdurch bedingten Kollision zwischen den Rotorblättern und dem Turm entgegengewirkt werden muß. Eine übliche Abhilfe besteht darin, Rotorblätter zu verwenden, die im unbelasteten Zustand eine vom Turm weggerichtete Vorkrümmung aufweisen. Einer derartigen Vorkrümmung sind jedoch konstruktive Grenzen gesetzt. Alternativ ist es möglich, die Rotorblätter mit einem sog. Konuswinkel auszustatten, d. h. die Längsachse der Rotorblätter aus der Radialebene der Umlaufachse des Rotors heraus vom Turm weg zu neigen. Übliche Konuswinkel liegen zwischen 0,5° und 6°. Grundsätzlich sind aber auch deutlich größere Konuswinkel realisierbar. Hierbei ist es allerdings von großem Nachteil, daß unter einem Konuswinkel angeordnete Rotorblätter über ihre gesamte Lebensdauer zum einen durch zusätzliche Zentrifugalkräfte und zum anderen durch zusätzliche gewichtsbedingte Biegemomente belastet werden, die während eines Rotorumlaufs wechselnd wirken. Weiterhin reduziert sich mit wachsendem Konuswinkel die projizierte Rotorfläche, was beispielsweise beim Konuswinkel von 4° bereits zu einer Ertragseinbuße von 0,5 % führt. Das Risiko der Kollision der Rotorblätter mit dem Turm besteht aber nur bei Windgeschwindigkeiten im Bereich der Nennwindgeschwindigkeit und/oder bei hohen Windturbulenzen.

Die erfindungsgemäß vorgesehene gegenseitige Neigung der Drehachsen der beiden Drehverbindungen ermöglicht es, durch gleichzeitiges gegenläufiges Verstellen der beiden Drehverbindungen den Konuswinkel des betreffenden Rotorblatts stufenlos einzustellen, ohne dabei notwendigerweise den azimutalen Verstellwinkel des Rotorblattes zu verändern. Somit kann abhängig von den herrschenden Windbedingungen, insbesondere Windgeschwindigkeit und Turbulenzgrad, der Konuswinkel so eingeregelt werden, daß der Energieertrag maximiert wird, die Belastungen für die Rotorblätter minimal sind und trotzdem eine Kollision der Rotorblätter mit dem Turm sicher ausgeschlossen wird. Hierzu wird zweckmäßigerweise ein in der Steuerung der Windkraftanlage integrierter Konuswinkel-Controller eingesetzt. Bei drehzahlvariablen Windenergieanlagen mit Konuswinkel in Windrichtung (downwind coning) ist es insbesondere möglich, durch die von dem Konuswinkel hervorgerufenen Zentrifugalkräfte die Windlasten wenigstens teilweise zu kompensieren, indem der Konuswinkel drehzahlabhängig verändert wird. Dies gilt grundsätzlich sowohl für Windkraftanlagen mit luvseitigem als auch mit leeseitigem Rotor.

Eine im Hinblick auf den Herstellungsaufwand besonders günstige Ausführungsform sieht vor, daß die beiden Drehverbindungen durch ein einziges Großwälzlager mit drei Ringen und zwei Laufbahnen gebildet sind. Die räumliche Anordnung von Rotornabe, Lagerringen, Rotorblatt und Verstellantrieben kann in vielen verschiedenen Weisen erfolgen und systematisch nach den Gesetzen der Konstruktionsmethodik variiert werden.

Im Rahmen der Erfindung ist auch ein Verfahren zum Betreiben der erfindungsgemäßen Einrichtung in der Weise vorgesehen, daß die beiden Drehverbindungen relativ zueinander unter Einstellung eines vorgesehenen Verstellwinkels in einer die Schmiermittelverteilung in den Drehverbindungen begünstigenden Weise angetrieben werden. Dies trägt dem Umstand Rechnung, daß bei den für die Drehverbindungen verwendeten Großwälzlagern während eines Großteils der Betriebsdauer der Windkraftanlage nur ein oder zwei Positionsbereiche angefahren werden, beispielsweise der optimale Blattwinkel und die Parkposition. Deshalb ist die Schmierstoffversorgung problematisch, weil eine gute Verteilung des Schmierstoffs vor allem durch häufiges Verfahren mit großen Verstellwegen gewährleistet wird. Dieses Schmierproblem wird im Stand der Technik dadurch gelöst, daß bei Windbedingungen, die kein Verstellen der Rotorblätter erfordern, in regelmäßigen Zeitabständen die Rotorblätter dennoch kurzzeitig verstellt werden, was natürlich mit Ertragseinbußen verbunden ist. Durch die beiden erfindungsgemäß vorgesehenen Drehverbindungen ist es nun in besonders vorteilhafter Weise möglich, durch gegensinniges Betreiben der beiden Verstellsysteme die Laufbahnen der Drehverbindungen gegeneinander zu bewegen, ohne daß notwendigerweise auch die azimutale Einstellung des Rotorblattes bewegt wird. Somit kann eine optimale Schmierstoffversorgung sichergestellt werden, wobei es alternativ möglich ist, in regelmäßigen Abständen kurzzeitig zu verstellen oder kontinuierlich mit sehr geringer Verstellgeschwindigkeit.

Eine andere zweckmäßige Betriebsmöglichkeit besteht darin, daß die beiden Drehverbindungen relativ zueinander unter Einstellung eines vorgesehenen Verstellwinkels in einer eine im Zeitverlauf gleichmäßige azimutale Belastungsverteilung begünstigenden Weise angetrieben werden. Diese Betriebsweise berücksichtigt, daß die strukturell tragenden Bauteile im Übergangsbereich zwischen dem Rotorblatt und der Rotornabe, beispielsweise Extender, Drehverbindungen, Schraubenflansche, über ihren Umfang sehr ungleichmäßig belastet werden, weil die aus dem Wind resultierenden stochastischen Lasten durch Rotorschub in einer Richtung überwiegen, während in einer dazu senkrechten anderen Richtung die periodischen Gewichtslasten dominieren. Ähnlich wie für das Schmierproblem der Drehverbindungen wird durch das gegenseitige Verstellen der Drehverbindungen eine Vergleichmäßigung der Belastungen für diese Bauteile erzielt, was eine wirtschaftlichere Auslegung der hochbelasteten Tragstruktur im Wurzelbereich der Rotorblätter erlaubt.

Die Erfindung ist in allen ihren Ausführungsformen für alle Horizontalwindkraftanlagen unabhängig von der Anzahl der Rotorblätter anwendbar. Sie ist um so wirtschaftlicher, je kleiner die Anzahl der Rotorblätter des Rotors ist.

Im folgenden wird die Erfindung unter Bezugnahme auf die Zeichnung rein beispielhaft weiter erläutert. Es zeigen:
- Fig. 1: eine schematische Darstellung im Bereich einer Rotornabe in einem durch die Rotorachse und die Längsachse des Rotorblattes gelegten Schnitt,
- Fig. 1a: eine detailliertere Darstellung der Drehverbindung an der Rotornabe in Fig. 1,
- Fig. 2: ein Diagramm zur Darstellung der azimutalen Verstellrate eines Rotorblattes in Abhängigkeit vom Blattwinkel,
- Fig. 3: ein Schema einer zur Steuerung der Verstellrate dienenden elektrischen Schaltung,
- Fig. 4: eine Fig. 1 entsprechende Schnittdarstellung einer weiteren Ausführungsform, und
- Fig. 5: eine ebensolche Schnittdarstellung einer noch weiteren Ausführungsform.

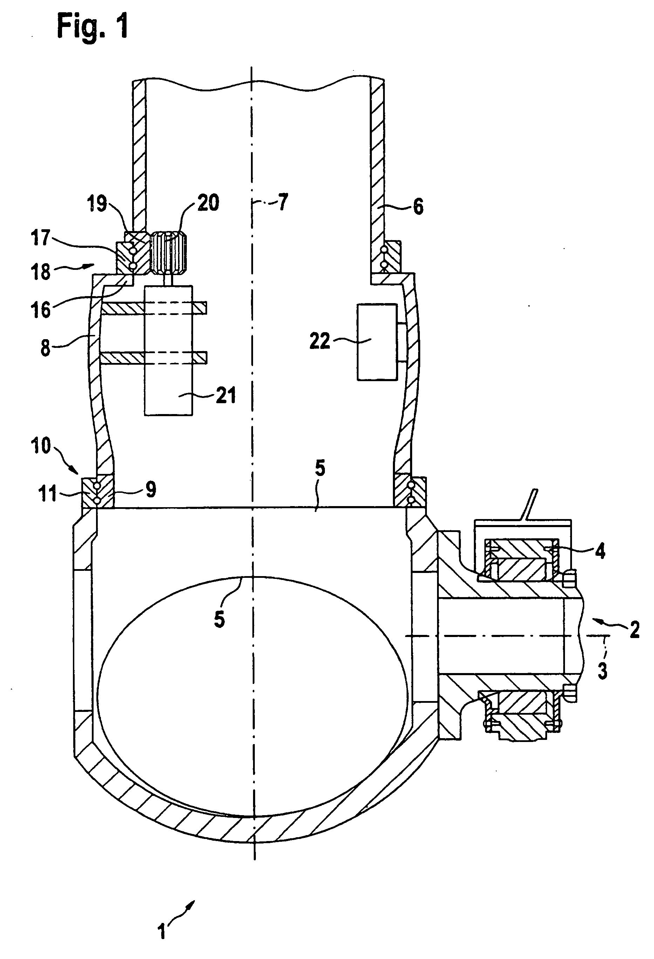

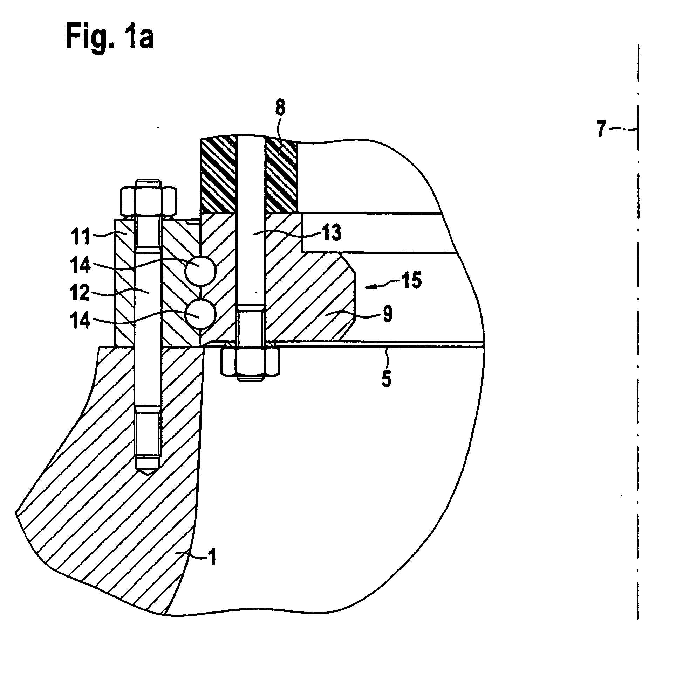

In Fig. 1 ist eine Rotornabe 1 an einer nur im Bereich ihrer Verbindung mit der Rotornabe 1 dargestellten Rotorwelle 2 in einer durch die Drehachse 3 der Rotorwelle 2 gelegten Schnittebene erkennbar. Die Rotorwelle 2 ist nahe ihrer Verbindung zur Rotornabe 1 mittels eines Rotorhauptlagers 4 in einem nicht dargestellten Maschinengehäuse drehbar gelagert, welches an der Spitze eines Turms um die Turmachse horizontal verdrehbar abgestützt ist. Am Umfang der gehäuseartigen Rotornabe 1 sind in bezug auf die Drehachse 3 unter gleichen azimutalen Winkelabständen von 120° insgesamt drei kreisförmige Anschlußöffnungen 5 ausgebildet, deren jede zum Anschluß eines Rotorblattes 6 dient. In Fig. 1 ist lediglich der nabennahe Bereich eines sich mit seiner Längsachse 7 in der Zeichnungsebene erstreckenden Rotorblattes 6 dargestellt.

Zwischen jedem Rotorblatt 6 und der Rotornabe 1 ist je eine Einrichtung zum Verstellen des Rotorblattes 6 um seine Längsachse 7 vorgesehen. Durch diese azimutale Verstellung der Rotorblätter 6 wird bei zu hohen Windstärken die mechanische Belastung begrenzt, indem die Rotorblätter 6 in bezug auf ihre Anströmrichtung in eine Fahnenstellung verdreht werden. Gemäß Fig. 1 weist diese Einrichtung ein sich koaxial zur Längsachse 7 erstreckendes, auch als "Extender" bezeichnetes rohrförmiges Bauteil 8 auf. Das der Rotornabe 1 zugewandte Stirnende des rohrförmigen Bauteils 8 ist an den Innenring 9 eines eine Drehverbindung bildenden Wälzlagers 10 angeflanscht, dessen Außenring 11 an der Anschlußöffnung 5 der Rotornabe 1 angeflanscht ist. Dies ist in Fig. 1 nur schematisch wiedergegeben, jedoch in Fig. 1a ausführlicher dargestellt. Dort sind die axialen Schraubbolzen 12 und 13 deutlich erkennbar, mit denen der Außenring 11 an der umlaufenden Flanschfläche der Rotornabe 1 bzw. der Innenring 9 an der stirnseitigen Flanschfläche des rohrförmigen Bauteils 8 festgelegt ist. Weiter sind die zwischen dem Innenring 9 und dem Außenring 11 angeordneten Wälzkörper 14 ersichtlich, von denen die beiden Ringe gegeneinander verdrehbar, aber axial unverrückbar geführt sind.

Der Innenring 9 weist radial innen eine umlaufende Verzahnung 15 zum kämmenden Eingriff mit einem Abtriebsritzel eines nabenfest angeordneten Antriebsmotors (beides nicht dargestellt) auf. Auf diese Weise wird das rohrförmige Bauteil 8 bei einer Betätigung des Antriebsmotors um die Längsachse 7 azimutal verstellt. Anstelle eines Antriebsmotors kann alternativ jede andere Art der Blattherstellung vorgesehen sein.

Das der Rotornabe 1 abgewandte Ende des rohrförmigen Bauteils 8 weist gemäß Fig. 1 ebenfalls einen stirnseitigen Anschlußflansch 16 für den Außenring 17 eines Wälzlagers 18, das ähnlich dem Wälzlager 10 (Fig. 1a) aufgebaut ist, auf. An den Innenring 19 dieses Wälzlagers ist das Stirnende des Rotorblattes 6 angeflanscht. Der Innenring 19 ist ebenfalls radial innen mit einer Innenverzahnung versehen, mit der das Abtriebsritzel 20 eines an der Innenseite des rohrförmigen Bauteils 8 festgelegten Antriebsmotors 21 kämmt. Daher wird durch einen Betrieb des Antriebsmotors das Rotorblatt 6 relativ zu dem rohrförmigen Bauteil 8 um die Längsachse 7 azimutal verstellt. In Fig. 1 sind im Inneren des rohrförmigen Bauteils 8 Akkumulatoren 22 schematisch angedeutet, welche die elektrische Betriebsenergie für den Antriebsmotor 21 liefern.

Dieser Aufbau verdeutlicht, daß sich die Verstellbewegungen der beiden die Wälzlager 10 und 18 aufweisenden Drehverbindungen überlagern und daher der azimutale Verstellwinkel des Rotorblattes 6 die gerichtete Überlagerung der azimutalen Verstellung des rohrförmigen Bauteils 8 gegenüber der Rotornabe 1 mit der azimutalen Verstellung des Rotorblatts 6 gegenüber dem rohrförmigen Bauteil 8 ist. Weiter ist ersichtlich, daß die die beiden sich überlagernden Verstellungen bewirkenden Verstellsysteme voneinander völlig unabhängig sind. Sofern eines der beiden Verstellsysteme ausfallen sollte, kann die Verstellung durch das jeweils andere Verstellsystem bewirkt werden.

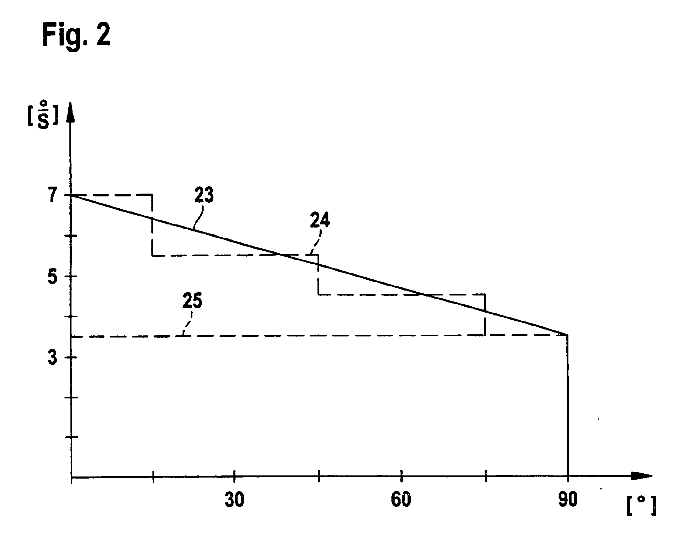

Fig. 2 zeigt den Verlauf der azimutalen Verstellrate des Rotorblatts in Abhängigkeit vom Rotorblattwinkel bei einer vorteilhaften Betriebsweise der beiden Verstellsysteme. Hierbei wird eines der beiden Verstellsysteme mit konstanter Verstellrate betrieben, während das andere Verstellsystem beginnend beim Rotorblattwinkel 0 ausgehend von derselben anfänglichen Verstellrate linear fallend bis zur Verstellrate 0 beim Rotorblattwinkel 90° heruntergeregelt wird. Dem entspricht in Fig. 2 der durch die durchgezogene Linie 23 wiedergegebene, streng trapezförmige Verstellratenverlauf. Da das kontinuierliche Herunterregeln verhältnismäßig aufwendig ist, kann in der Praxis, insbesondere für den Fall der Sicherheitsabschaltung, jedoch die Trapezform durch einen stufenförmigen Verlauf angenähert werden, der sich durch Schalterbetätigungen einfacher herbeiführen läßt. Eine solche stufenförmige Annäherung mit vier Stufen ist in Fig. 2 durch die gestrichelte Linie 24 wiedergegeben. Versagt eines der beiden Verstellsysteme, so erfolgt die Verstellung mit der maximalen Verstellrate des anderen Verstellsystems. Dies wird durch die horizontale gestrichelte Linie 25 in Fig. 2 wiedergegeben.

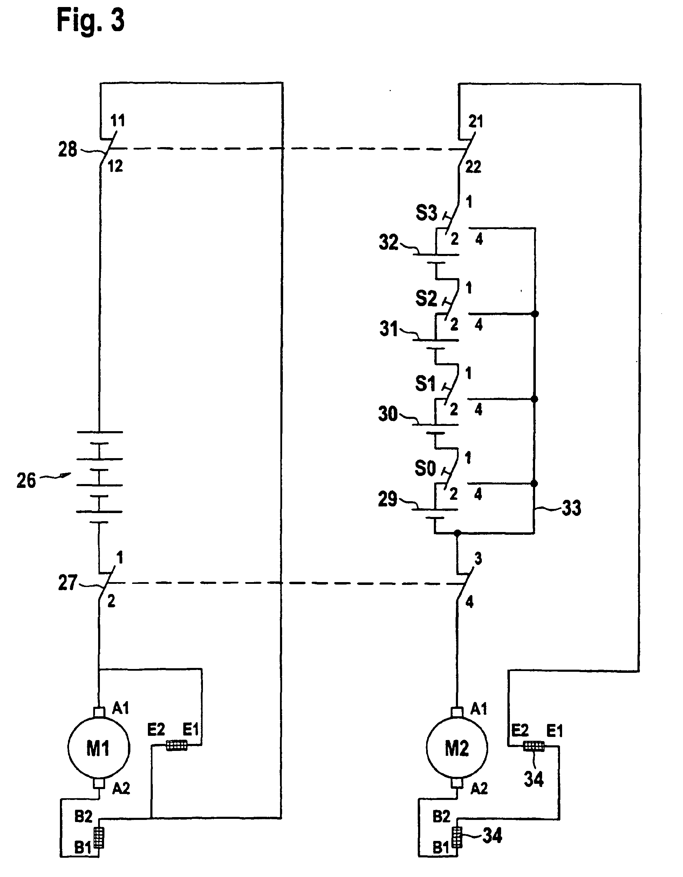

Eine mögliche elektrische Ansteuerung der Antriebsmotore M1 und M2 der beiden Verstellsysteme, mit welcher der in Fig. 2 dargestellte stufenförmige Verlauf 24 herbeigeführt werden kann, ist in Fig. 3 dargestellt. Danach befindet sich im Antriebsstromkreis des Motors M1 ein die elektrische Antriebsenergie liefernder Akkumulator in Reihe mit einem Endschalter 27, der bei Erreichung des 90°-Rotorblattwinkels den Antriebsmotor M1 abschaltet, und einem Schaltrelais 28, das bei Netzausfall oder Auslösen der Sicherheitsabschaltung den Antriebsstromkreis schließt. Somit wird der Antriebsmotor M1 des einen Verstellsystems beim Schließen des Schaltrelais 28 aus dem Akkumulator 26 konstant mit Betriebsenergie versorgt und treibt daher das Verstellsystem mit konstanter Verstellrate an.

Der Endschalter 27 und das Schaltrelais 28 weisen jeweils einen simultan betätigten zweiten Schaltkontakt auf. Die beiden zweiten Schaltkontakte liegen im Ansteuerungsschaltkreis des Antriebsmotors M2 des anderen Verstellsystems, das dadurch gleichzeitig mit dem ersten Verstellsystem zugeschaltet bzw. ausgeschaltet wird. Weiter liegt in diesem Ansteuerungsschaltkreis eine Reihenschaltung aus vier Schaltern S0 bis S3 und vier Akkumulatoren 29, 30, 31, 32 in abwechselnder Reihenfolge. In der in Fig. 3 dargestellten Schaltstellung der Schalter S0 bis S3 sind diese Akkumulatoren 29 bis 32 hintereinandergeschaltet mit der Folge, daß der Antriebsmotor M2 die maximale Verstellrate liefert. In Abhängigkeit von dem Verstellweg des von dem Antriebsmotor M1 angetriebenen Verstellsystems werden die Schalter in der Reihenfolge S0, S1, S2 und S3 durch geeignet angebrachte Nocken in ihre der Schaltstellung von Fig. 3 entgegengesetzte Schaltstellung umgeschaltet. Dadurch wird jeweils der betreffende Akkumulator 29 bis 32 aus dem Ansteuerungsschaltkreis ausgeschaltet, indem der Ansteuerungsschaltkreis statt über den Akkumulator lediglich über einen Leiter 33 geschlossen wird. Jede Umschaltung eines Schalters S0 bis S3 entspricht daher einer Stufe in Fig. 2.

Fig. 3 läßt weiter erkennen, daß der konstant angesteuerte Antriebsmotor M1 eine Nebenschlußmaschine ist, während der über die Schalter S0 bis S3 gestuft angesteuerte Antriebsmotor M2 des anderen Verstellsystems eine Reihenschlußmaschine ist. Erstere hat ein Verhalten, das bei niedrigen Belastungen die Verstellrate weitgehend konstant hält. Letztere liefert auch im Akkubetrieb ein erwünschtermaßen hohes Anfahrmoment. Statt der Steuerung durch die Schalter S0 bis S3 könnten alternativ Umschaltungen der zweipolig ausgeführten Statorwicklungen 34 durchgeführt werden.

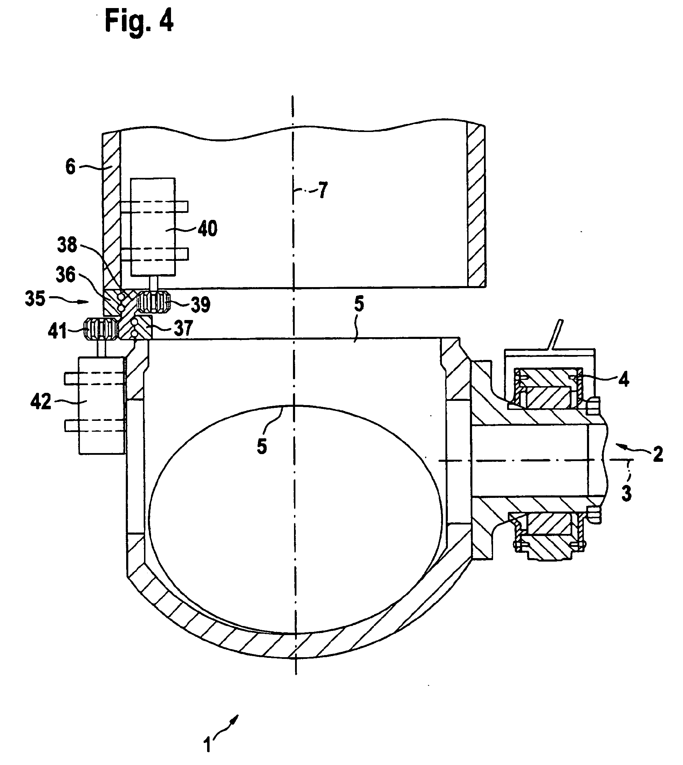

Die in Fig. 4 dargestellte Ausführungsform entspricht der in Fig. 1 dargestellten Ausführungsform mit dem Unterschied, daß in Fig. 4 das rohrförmige Bauteil 8 zwischen den beiden Drehverbindungen 10, 18 in Fig. 1 entfallen ist. Im übrigen sind in Fig. 4 für die mit Fig. 1 übereinstimmenden Bauteile dieselben Bezugszeichen verwendet.

Abweichend von Fig. 1 ist in Fig. 4 zwischen dem der Rotornabe 1 zugewandten Ende des Rotorblatts 6 oder eines das Rotorblatt 6 verlängernden Extenders und der betreffenden Anschlußöffnung 5 der Rotornabe 1 ein Wälzlager 35 mit drei Ringen und zwei Laufbahnen angeordnet. An den äußeren Ring 36 ist das stirnseitige Ende des Rotorblatts 6 bzw. seines Extenders angeflanscht, während der innere Ring 37 an die Anschlußöffnung 5 der Rotornabe 1 angeflanscht ist. Der zwischen dem äußeren und dem inneren Ring 36, 37 angeordnete mittlere Ring 38 ist durch die beidseits angeordneten Laufbahnen relativ zu den beiden anderen Ringen 36, 37 drehbar, aber axial unverschieblich geführt. Ferner sind der äußere und der innere Ring 36, 37 axial gegeneinander versetzt. Die durch diese Versetzung freiliegenden radial äußeren und radial inneren Oberflächen des mittleren Rings 38 sind jeweils mit einer Außenverzahnung bzw. Innenverzahnung versehen. Mit der Innenverzahnung kämmt das Abtriebsritzel 39 eines innerhalb des Rotorblattes 6 oder seines Extenders festgelegten Antriebsmotors 40, während mit der Außenverzahnung das Abtriebsritzel 41 eines an der Außenseite der Rotornabe 1 festgelegten Antriebsmotors 42 kämmt. Auf diese Weise werden die beiden voneinander unabhängigen Verstellbewegungen an dem dreiringigen Wälzlager 35 ausgeführt.

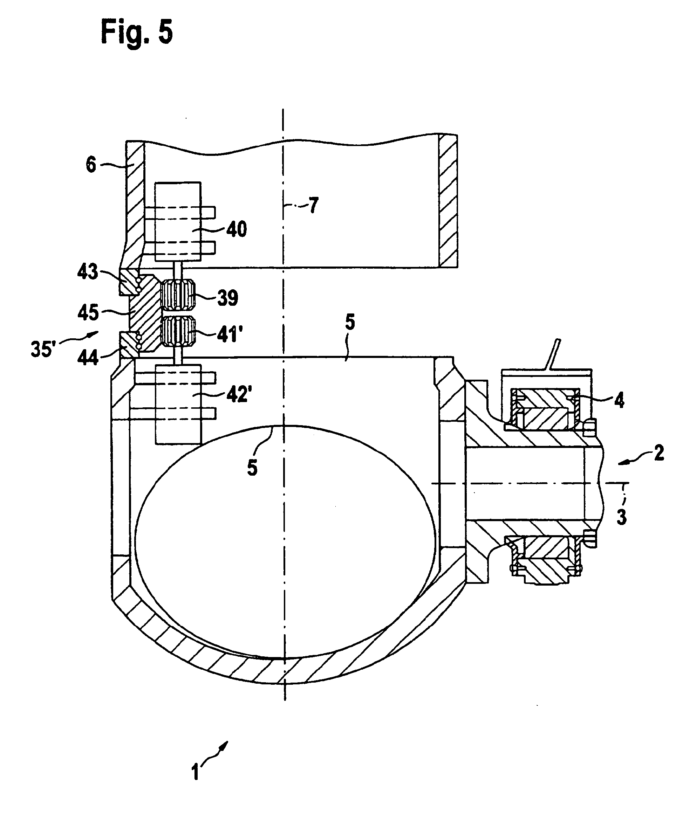

Die in Fig. 5 dargestellte Ausführungsform entspricht der Ausführungsform von Fig. 4 mit dem einzigen Unterschied, daß der mit dem Abtriebsritzel 41 versehene nabenfeste Antriebsmotor 42 nunmehr innerhalb der Rotornabe 1 angeordnet ist. Dies ist in Fig. 5 durch die Bezugszeichen 41' und 42' bezeichnet. Im übrigen sind für die mit Fig. 4 übereinstimmenden Teile identische Bezugszeichen verwendet. Dabei ist allerdings zu bemerken, daß das dreiringige Wälzlager 35 von Fig. 4 in Fig. 5 eine etwas andere Ausbildung aufweist, was durch das Bezugszeichen 35' angedeutet ist.

Im einzelnen weist zwar das Wälzlager 35' ebenso wie das Wälzlager 35 drei Ringe und zwei Laufbahnen auf. Jedoch sind zwei radial äußere Ringe 43, 44 axial fluchtend jeweils über Laufbahnen auf einem inneren Ring 45 drehbar und axial unverrückbar gelagert, wobei der eine äußere Ring 43 am Rotorflügel 6 bzw. dessen Extender und der andere äußere Ring 44 an der Anschlußöffnung 5 der Rotornabe 1 angeflanscht ist. Der innere Ring 45 ist mit einer Innenverzahnung versehen, mit der sowohl das Abtriebsritzel 42 des nabenfesten Antriebsmotors 42' als auch das Abtriebsritzel 39 des rotorblattfesten Antriebsmotors 40 kämmt. Auch hierdurch werden ersichtlich die beiden unabhängigen Verstellbewegungen der beiden Verstellsysteme an dem einzigen Wälzlager 35' bewirkt.

Die dargestellten Varianten sind stellvertretend für eine Vielzahl von Varianten, die aus einer nach den Gesetzen der Konstruktionsmethodik abgeleiteten systematischen Variation der räumlichen Anordnung der beteiligten Elemente hervorgehen können.

In allen vorstehend erläuterten Ausführungsformen können die beiden Verstellsysteme derart zueinander gegenläufig angetrieben werden, daß der daraus resultierende Verstellwinkel 0 ist, d. h. der Rotorblatteinstellwinkel sich nicht ändert. Dies kann dazu ausgenutzt werden, die beiden Drehverbindungen in einer Weise gegeneinander zu bewegen, daß eine gute Verteilung des Schmiermittels erzielt wird, ohne daß es dabei notwendigerweise zu einer Veränderung des Rotorblatteinstellwinkels kommt. In gleicher Weise kann die Steuerung der Relativbewegung zwischen den beiden Drehverbindungen derart ausgeführt werden, daß eine über die Zeit gleichmäßige Verteilung der Belastungen über den Umfang erreicht wird, ohne daß es dabei notwendigerweise zu einer Veränderung des Rotorblatteinstellwinkels kommt.

Abweichend von den dargestellten Ausführungsformen, bei denen die Drehachsen der beiden Verstellsysteme parallel verlaufen, kann alternativ eine gegenseitige Neigung der beiden Drehachsen vorgesehen sein. Dann können die Drehbewegungen der beiden Drehverbindungen relativ zueinander derart gesteuert werden, daß gegenüber der Radialebene der Rotorwelle ein bestimmter Konuswinkel des betreffenden Rotorblattes eingestellt wird, ohne daß es dabei notwendigerweise zu einer Veränderung des Rotorblatteinstellwinkels kommt.

### Verzeichnis der Bezugszeichen

- 1: Rotornabe
- 2: Rotorwelle
- 3: Drehachse
- 4: Rotorhauptlager
- 5: Anschlußöffnungen
- 6: Rotorblatt
- 7: Längsachse
- 8: rohrförmiges Bauteil
- 9: Innenring
- 10: Wälzlager
- 11: Außenring
- 12: Schraubbolzen
- 13: Schraubbolzen
- 14: Wälzkörper
- 15: Verzahnung
- 16: Anschlußflansch
- 17: Außenring
- 18: Wälzlager
- 19: Innenring
- 20: Abtriebsritzel
- 21: Antriebsmotor
- 22: Akkumulatoren
- 23: trapezförmiger Verstellratenverlauf
- 24: stufenförmige Annäherung
- 25: Verlauf beim Versagen eines Verstellsystems
- M1, M2: Antriebsmotore
- 26: Akkumulator
- 27: Endschalter
- 28: Schaltrelais
- S0 bis S3: Schalter
- 29 bis 32: Akkumulatoren
- 33: Leiter
- 34: Statorwicklungen
- 35, 35': Wälzlager
- 36: äußerer Ring
- 37: innerer Ring
- 38: mittlerer Ring
- 39: Abtriebsritzel
- 40: Antriebsmotor
- 41,41': Abtriebsritzel
- 42, 42': Antriebsmotor
- 43, 44: äußere Ringe
- 45: innerer Ring

## Patentansprüche

1. Einrichtung zum Verstellen eines sich in seiner Längsachse von einer Rotornabe (1) eines Rotors einer Windkraftanlage aus erstreckenden Rotorblattes (6) um einen in bezug auf die Längsachse (7) azimutalen Verstellwinkel, **dadurch gekennzeichnet, dass** die Einrichtung zwei voneinander unabhängige Verstellsysteme aufweist, deren jedes auch bei einem Ausfall des jeweils anderen Verstellsystems die Verstellung des Rotorblattes (6) bewirkt wobei die beiden Verstellsysteme je eine zwischen der Rotornabe (1) und dem Rotorblatt (6) angeordnete, von einem Antrieb verstellbare Drehverbindung (10, 18) auf weisen und die beiden Drehverbindungen (10, 18) im Wesentlichen zueinander konzentrisch angeordnet sind.

2. Einrichtung nach Anspruch 1, **dadurch gekennzeichnet, dass** eine der beiden Drehverbindungen (10) sowie deren Antrieb an der Rotornabe (1) und die andere Drehverbindung (18) sowie deren Antrieb (20, 21) außerhalb der Rotornabe (1) angeordnet ist.

3. Einrichtung nach Anspruch 2, **dadurch gekennzeichnet, dass** die außerhalb der Rotornabe (1) angeordnete Drehverbindung (18) sowie deren Antrieb (20, 21) an einem sich zwischen den beiden Drehverbindungen (10, 18) axial erstreckenden rohrförmigen Bauteil (8) angeordnet ist.

4. Einrichtung nach Anspruch 3, **dadurch gekennzeichnet, dass** das rohrförmige Bauteil (8) ein vorzugsweise im Wickelverfahren hergestelltes Faserverbundbauteil ist.

5. Einrichtung nach Anspruch 1 , **dadurch gekennzeichnet, dass** eine der beiden Drehverbindungen sowie deren Antrieb an der Rotornabe (1) und die andere Drehverbindung sowie deren Antrieb unmittelbar am Rotorblatt (6) angeordnet ist.

6. Einrichtung nach Anspruch 5, **dadurch gekennzeichnet, dass** der Antrieb (39, 40) der am Rotorblatt (6) angeordneten Drehverbindung (35) im wesentlichen innerhalb des Rotorblattes (6) angeordnet ist.

7. Einrichtung nach Anspruch 5, **dadurch gekennzeichnet, dass** der Antrieb der am Rotorblatt angeordneten Drehverbindung im Wesentlichen außerhalb des Rotorblattes angeordnet ist.

8. Einrichtung nach einem der Ansprüche 1 bis 7, **dadurch gekennzeichnet, dass** die beiden Verstellsysteme insbesondere im Fall der Sicherheitsabschaltung gleichzeitig betätigbar sind.

9. Einrichtung nach einem der Ansprüche 1 bis 8, **dadurch gekennzeichnet, dass** die aus dem Betrieb der beiden Verstellsysteme resultierende azimutale Verstellrate veränderlich steuerbar ist, insbesondere zeitabhängig und/oder rotorblattwinkelabhängig und/oder verstellwegabhängig.

10. Einrichtung nach einem der Ansprüche 1 bis 9, **dadurch gekennzeichnet, dass** die Verstellrate des einen Verstellsystems in Abhängigkeit von dem Verstellweg des anderen Verstellsystems gesteuert wird.

11. Einrichtung nach einem der Ansprüche 1 bis 10, **dadurch gekennzeichnet, dass** mindestens eines, vorzugsweise jedes der Verstellsysteme ein elektrisches System ist.

12. Einrichtung nach einem der Ansprüche 1 bis 11, **dadurch gekennzeichnet, dass** eine Überwachungseinrichtung vorgesehen ist, durch die ansprechend auf einen Ausfall eines der beiden Verstellsysteme die Verstellrate des jeweils anderen Verstellsystems zumindest zeitweise erhöht wird.

13. Einrichtung nach Anspruch 11, **dadurch gekennzeichnet, dass** die Verstellrate durch stufenweises Zu- bzw. Abschalten von den Antrieb speisenden Akkuzellen (29, 30, 31, 32) verändert wird.

14. Einrichtung nach Anspruch 11, **dadurch gekennzeichnet, dass** die Verstellrate durch stufenweises Umschalten einer Statorwicklung (34) des Antriebs verändert wird.

15. Einrichtung nach Anspruch 11, **dadurch gekennzeichnet, dass** der Antrieb des einen Verstellsystems einen Reihenschlussmotor (M2) und der Antrieb des anderen Verstellsystems einen Nebenschlussmotor (M1) aufweist.

16. Einrichtung nach Anspruch 11, **dadurch gekennzeichnet, dass** der Antrieb des einen Verstellsystems einen Drehstrommotor und der Antrieb des anderen Verstellsystems einen Gleichstrommotor aufweist.

17. Einrichtung nach einem der Ansprüche 1 bis 16, **dadurch gekennzeichnet, dass** die Drehachsen der beiden Drehverbindungen gegeneinander geneigt sind.

18. Einrichtung nach einem der Ansprüche 1 bis 17; **dadurch gekennzeichnet, dass** die beiden Drehverbindungen durch ein einziges Grosswalzlager (35; 35') mit drei Ringen (36, 37, 38; 43, 44, 45) und zwei Laufbahnen gebildet sind.

19. Verfahren zum Betreiben einer Einrichtung zum Verstellen eines sich in seiner Längsachse von einer Rotornabe eines Rotors einer Windkraftanlage aus erstreckenden Rotorblattes um einen in bezug auf die Längsachse azimutalen Verstellwinkel, die zwei voneinander unabhängige Verstellsysteme aufweist, deren jedes eine zwischen dem Rotorblatt und der Rotornabe wirkende, von einem Antrieb verstellbare Drehverbindung aufweist, wobei die beiden Drehverbindungen im wesentlichen zueinander konzentrisch angeordnet sind, **dadurch gekennzeichnet, dass** die beiden Drehverbindungen relativ zueinander unter Einstellung eines vorgesehenen Verstellwinkels in einer die Schmiermittelverteilung in den Drehverbindungen begünstigenden Weise angetrieben werden.

20. Verfahren zum Betreiben einer Einrichtung zum Verstellen eines sich in seiner Längsachse von einer Rotornabe eines Rotors einer Windkraftanlage aus erstreckenden Rotorblattes um einen in bezug auf die Längsachse azimutalen Verstellwinkel, die zwei voneinander unabhängige Verstellsysteme aufweist, deren jedes eine zwischen dem Rotorblatt und der Rotornabe wirkende, von einem Antrieb verstellbare Drehverbindung aufweist, wobei die beiden Drehverbindungen im wesentlichen zueinander konzentrisch angeordnet sind, **dadurch gekennzeichnet, dass** die beiden Drehverbindungen relativ zueinander unter Einstellung eines vorgesehenen Verstellwinkels in einer eine im Zeitverlauf gleichmässige azimutale Belastungsverteilung begünstigenden Weise angetrieben werden.

21. Verfahren zum Betreiben einer Einrichtung zum Verstellen eines sich in seiner Längsachse von einer Rotornabe eines Rotors einer Windkraftanlage aus erstreckenden Rotorblattes um einen in bezug auf die Längsachse azimutalen Verstellwinkel, die zwei voneinander unabhängige Verstellsysteme aufweist, deren jedes eine zwischen dem Rotorblatt und der Rotornabe wirkende, von einem Antrieb verstellbare Drehverbindung aufweist, wobei die beiden Drehverbindungen im wesentlichen zueinander konzentrisch angeordnet sind, wobei die Drehachsen der beiden Drehverbindungen gegeneinander geneigt sind, **dadurch gekennzeichnet, dass** die beiden Drehverbindungen relativ zueinander unter Einstellung eines vorgesehenen Verstellwinkels in einer eine vorgesehene räumliche Orientierung der Längsachse des Rotorblattes ergebenden Weise angetrieben werden.

## Claims

1. Means for adjusting a rotor blade (6) which extends, along its longitudinal axis, out from a rotor hub (1) of a rotor of a wind power plant through an azimuthal adjustment angle with respect to the longitudinal axis (7), **characterized in that** the means has two independent adjustment systems each of which produces adjustment of the rotor blade (6) even in case of failure of the other adjustment system wherein the two adjustment systems each have a rotatable connection (10, 18), arranged between the rotor hub (1) and the rotor blade (6), and which can be adjusted by a drive, wherein the two rotatable connections (10, 18) are arranged essentially concentrically with respect to each other.

2. Means according to claim 1, **characterized in that** one of the two rotatable connections (10) and its drive are arranged at the rotor hub (1) and the other rotatable connection (18) and its drive (20, 21) are placed outside the rotor hub (1).

3. Means according to claim 2, **characterized in that** the rotatable connection (18) arranged outside the rotor hub (1) and its drive (20, 21) are arranged on a tubular part (8) extending axially between the two rotatable connections (10, 18).

4. Means according to claim 3, **characterized in that** the tubular part (8) is a fiber composite part preferably produced with a winding process.

5. Means according to claim 1, **characterized in that** one of the two rotatable connections and its drive are arranged on the rotor hub (1) and the other rotatable connection and its drive are arranged directly on the rotor blade (6).

6. Means according to claim 5, **characterized in that** the drive (39, 40) of the rotatable connection (35) arranged at the rotor blade (6) is arranged essentially within the rotor blade (6).

7. Means according to claim 5, **characterized in that** the drive of the rotatable connection arranged on the rotor blade is arranged essentially outside the rotor blade.

8. Means according to one of claims 1 to 7, **characterized in that** the two adjustment systems can be actuated simultaneously, especially in the case of a safety shutdown.

9. Means according to one of claims 1 to 8, **characterized in that** the azimuthal adjustment rate resulting from operation of the two adjustment systems can be controlled variably, particularly depending on the time and/or the rotor blade angle and/or the distance of adjustment.

10. Means according to one of claims 1 to 9, **characterized in that** the adjustment rate of one adjustment system is controlled as a function of the adjustment distance of the other adjustment system.

11. Means according to one of claims 1 to 10, **characterized in that** at least one, and preferably both of the adjustment systems is an electrical system.

12. Means according to one of claims 1 to 11, **characterized in that** a monitoring means is provided, by means of which, in case of a failure of one of the two adjustment systems, the adjustment rate of the respective other adjustment system can be increased at least temporarily.

13. Means according to claim 12, **characterized in that** the adjustment rate is changed by stepwise switching on or off of battery cells (29, 30, 31, 32) feeding the motor.

14. Means according to claim 11, **characterized in that** the adjustment rate is changed by stepwise switching of a stator winding (34) of the drive.

15. Means according to claim 11, **characterized in that** the drive of one adjustment system has a series-wound motor (M2) and the drive of the other adjustment system has a shunt-wound motor (M1).

16. Means according to claim 11, **characterized in that** the drive of one adjustment system is a three-phase motor and the drive of the other adjustment system is a direct-current motor.

17. Means according to one of claims 1 to 16, **characterized in that** the axes of rotation of the two rotatable connections are at an angle to each other.

18. Means according to one of claims 1 to 17, **characterized in that** the two rotatable connections are formed by a single large-diameter live ring bearing (35, 35') with three rings (36, 37, 38; 43, 44, 45) and two tracks.

19. Process for operating a means to adjust a rotor blade which extends, along its longitudinal axis, out from a rotor hub of a rotor of a wind power plant through an azimuthal adjustment angle with respect to the longitudinal axis, having two independent adjustment systems, each of which comprises a rotatable connection acting between the rotor blade and the rotor hub and being adjustable by a drive, wherein the two rotatable connections are arranged essentially concentrically with respect to each other, **characterized in that** the two rotatable connections are driven relative to each other in establishing a specified adjustment angle in a manner which favors even distribution of the lubricant in the rotatable connections.

20. Process for operating a means to adjust a rotor blade which extends, along its longitudinal axis, out from a rotor hub of a rotor of a wind power plant through an azimuthal adjustment angle with respect to the longitudinal axis, having two independent adjustment systems, each of which comprises a rotatable connection acting between the rotor blade and the rotor hub and being adjustable by a drive, wherein the two rotatable connections are arranged essentially concentrically with respect to each other, **characterized in that** the two rotatable connections are driven relative to each other during in establishing a specified adjustment angle in a manner which favors even azimuthal distribution of load over the course of time.

21. Process for operating a means to adjust a rotor blade which extends, along longitudinal axis, out from a rotor hub of a rotor of a wind power plant through an azimuthal adjustment angle with respect to the longitudinal axis, having two independent adjustment systems, each of which comprises a rotatable connection acting between the rotor blade and the rotor hub and being adjustable by a drive, wherein the axes of rotation of the two rotatable connections are at an angle to each other, wherein the two rotatable connections are arranged essentially concentrically with respect to each other, **characterized in that** the two rotatable connections are driven relative to each other in establishing a specified adjustment angle in such a manner as to give a specified spatial orientation to the long axis of the rotor blade.

## Revendications

1. Dispositif de déplacement d'une pale de rotor (6), qui s'étend sur son axe longitudinal depuis un moyeu de rotor (1) d'un rotor d'une éolienne, d'un angle de déplacement azimutal par rapport à l'axe longitudinal (7), **caractérisé en ce que** le dispositif présente deux systèmes de déplacement indépendants l'un de l'autre, dont chacun, même en cas de panne de l'autre système de déplacement respectif, provoque le déplacement de la pale de rotor(6), les deux systèmes de déplacement présentant chacun un raccord rotatif (10, 18), disposé entre le moyeu de rotor (1) et la pale de rotor (6) et mobile par un entraînement, et les deux raccords rotatifs (10, 18) étant disposés de façon essentiellement concentrique l'un par rapport à l'autre.

2. Dispositif selon la revendication 1, **caractérisé en ce qu'**un des deux raccords rotatifs (10) et son entraînement est disposé au niveau du moyeu de rotor (1) et l'autre raccord rotatif (18) et son entraînement (20, 21) est disposé hors du moyeu de rotor (1).

3. Dispositif selon la revendication 2, **caractérisé en ce que** le raccord rotatif (18) disposé hors du moyeu de rotor (1) et son entraînement (20, 21) sont disposés au niveau d'un composant tubulaire (8) qui s'étend axialement entre les deux raccords rotatifs (10, 18).

4. Dispositif selon la revendication 3, **caractérisé en ce que** le composant tubulaire (8) est un composant composite renforcé par des fibres fabriqué de préférence selon un procédé d'enroulement.

5. Dispositif selon la revendication 1, **caractérisé en ce qu'**un des deux raccords rotatifs et son entraînement sont disposés au niveau du moyeu de rotor (1) et **en ce que** l'autre raccord rotatif et son entraînement sont disposés directement au niveau de la pale de rotor (6).

6. Dispositif selon la revendication 5, **caractérisé en ce que** l'entraînement (39, 40) du raccord rotatif (35) disposé au niveau de la pale de rotor (6) est disposé essentiellement à l'intérieur de la pale de rotor (6).

7. Dispositif selon la revendication 5, **caractérisé en ce que** l'entraînement du raccord rotatif disposé au niveau de la pale de rotor est disposé essentiellement hors de la pale de rotor.

8. Dispositif selon l'une des revendications 1 à 7, **caractérisé en ce que** les deux systèmes de déplacement peuvent être actionnés simultanément, en particulier en cas de coupure de sécurité.

9. Dispositif selon l'une des revendications 1 à 8, **caractérisé en ce que** les vitesses de déplacement azimutal résultant du fonctionnement des deux systèmes de déplacement peuvent être commandées de façon variable, en particulier en fonction du temps et/ou en fonction de l'angle de la pale de rotor et/ou en fonction de la course de déplacement.

10. Dispositif selon l'une des revendications 1 à 9, **caractérisé en ce que** la vitesse de déplacement d'un système de déplacement est commandée en fonction de la course de déplacement de l'autre système de déplacement.

11. Dispositif selon l'une des revendications 1 à 10, **caractérisé en ce qu'**au moins un, de préférence chacun, des systèmes de déplacement est un système électrique.

12. Dispositif selon l'une des revendications 1 à 11, **caractérisé en ce qu'**est prévu un dispositif de surveillance par lequel, en réponse à une panne d'un des deux systèmes de déplacement, la vitesse de déplacement de l'autre système de déplacement respectif est au moins partiellement augmentée.

13. Dispositif selon la revendication 11, **caractérisé en ce que** la vitesse de déplacement est modifiée par une connexion ou une déconnexion graduelle des cellules d'accumulateur (29, 30, 31, 32) alimentant l'entraînement.

14. Dispositif selon la revendication 11, **caractérisé en ce que** la vitesse de réglage est modifiée par une commutation graduelle d'un enroulement de stator (34) de l'entraînement.

15. Dispositif selon la revendication 11, **caractérisé en ce que** l'entraînement d'un système de déplacement présente un moteur série (M2) et **en ce que** l'entraînement de l'autre système de déplacement présente un moteur shunt (M1).

16. Dispositif selon la revendication 11, **caractérisé en ce que** l'entraînement d'un système de déplacement présente un moteur triphasé et **en ce que** l'entraînement de l'autre système de déplacement présente un moteur à courant continu.

17. Dispositif selon l'une des revendications 1 à 16, **caractérisé en ce que** les axes de rotation des deux raccords rotatifs sont inclinés réciproquement.

18. Dispositif selon l'une des revendications 1 à 17, **caractérisé en ce que** les deux raccords rotatifs sont formés par une couronne d'orientation unique (35, 35') comportant trois bagues (36, 37, 38 ; 43, 44, 45) et deux chemins de roulement.

19. Procédé d'exploitation d'un dispositif de déplacement d'une pale de rotor, qui s'étend sur son axe longitudinal depuis un moyeu de rotor d'un rotor d'une éolienne, d'un angle de déplacement azimutal par rapport à l'axe longitudinal, qui présente deux systèmes de déplacement indépendants l'un de l'autre, dont chacun présente un raccord rotatif pouvant être déplacé par entraînement et agissant entre la pale de rotor et le moyeu de rotor, dans lequel les deux raccords rotatifs sont disposés de façon essentiellement concentrique l'un par rapport à l'autre, **caractérisé en ce que** les deux raccords rotatifs sont entraînés l'un par rapport à l'autre en réglant un angle de déplacement prévu d'une façon qui favorise la répartition du lubrifiant dans les raccords rotatifs.

20. Procédé d'exploitation d'un dispositif de déplacement d'une pale de rotor, qui s'étend sur son axe longitudinal depuis un moyeu de rotor d'un rotor d'une éolienne, d'un angle de déplacement azimutal par rapport à l'axe longitudinal, qui présente deux systèmes de déplacement indépendants l'un de l'autre, dont chacun présente un raccord rotatif pouvant être déplacé par entraînement et agissant entre la pale de rotor et le moyeu de rotor, dans lequel les deux raccords rotatifs sont disposés de façon essentiellement concentrique l'un par rapport à l'autre, **caractérisé en ce que** les deux raccords rotatifs sont entraînés l'un par rapport à l'autre en réglant un angle de déplacement prévu d'une façon qui favorise une répartition de charge azimutale régulière dans le temps.

21. Procédé d'exploitation d'un dispositif de déplacement d'une pale de rotor, qui s'étend sur son axe longitudinal depuis un moyeu de rotor d'un rotor d'une éolienne, d'un angle de déplacement azimutal par rapport à l'axe longitudinal, qui présente deux systèmes de déplacement indépendants l'un de l'autre, dont chacun présente un raccord rotatif pouvant être déplacé par entraînement et agissant entre la pale de rotor et le moyeu de rotor, dans lequel les deux raccords rotatifs sont disposés de façon essentiellement concentrique l'un par rapport à l'autre, dans lequel les axes de rotation des deux raccords rotatifs sont inclinés réciproquement, **caractérisé en ce que** les deux raccords rotatifs sont entraînés l'un par rapport à l'autre en réglant un angle de déplacement prévu d'une façon qui génère une orientation spatiale prévue de l'axe longitudinal de la pale de rotor.
